# EUROPÄISCHE PATENTSCHRIFT

(11) **EP 0 619 250 B1**
(45) Veröffentlichungstag und Bekanntmachung des Hinweises auf die Patenterteilung: **16.06.1999**
(21) Anmeldenummer: 94104389.5
(22) Anmeldetag: 21.03.1994
(51) Int. Cl.: B65G 47/26

(54) **Vorrichtung zum Fördern geschichteter Ware**
Device for conveying layered material
Dispositif de transport pour produits disposés en couches

(30) Priorität: 07.04.1993 DE 4311519
(43) Veröffentlichungstag der Anmeldung: 12.10.1994
(73) Patentinhaber: Eberhard, Hans Joachim, D-76287 Rheinstetten (DE)
(72) Erfinder: Eberhard, Hans Joachim, D-76287 Rheinstetten (DE)
(74) Vertreter: Happe, Otto, Dipl.-Ing.

(56) Entgegenhaltungen:
- DE-A- 2 644 240
- DE-A- 3 612 021
- GB-A- 1 036 466
- US-A- 3 930 573
- US-A- 4 318 468

## Beschreibung

Die Erfindung betrifft eine Vorrichtung zum Fördern geschichteter Waren mittels mindestens eines Fördergurtes, wobei die zu fördernden geschichteten Waren an bestimmten Stellen bzw. in bestimmten Bereichen der Förderstrecke gestaut werden können. Eine derartige Vorrichtung ist z.B. aus der DE-A-3612021 bekannt.

Beim Fördern geschichteter Waren besteht häufig die Notwendigkeit, vor Zuteilstellen, Verzweigungen und Endstrecken den Förderstrom zu stauen, also die Waren vorübergehend zu verlangsamen oder auch anzuhalten. Dies gilt insbesondere in der Versandtechnik, und zwar zwischen Lager und Packerei. Die Waren tragende Einrichtungen, wie Paletten u. dgl., sind hierbei unzweckmäßig, da diese Einrichtungen maßlich den jeweils größten Abmessungen der zu fördernden Waren entsprechen müßten und dadurch verhältnismäßig viel Raum beanspruchen würden. Außerdem müßten derartige Einrichtungen entladen und zurückgeführt werden.

Für Waren, die nicht stoßempfindlich sind, gibt es bewährte Vorrichtungen, die mit oder ohne Staudruck oder staudruckarm arbeiten. Hierzu gehören beispielsweise passive Staurollenförderer, Schwerkraftrollenförderer sowie angetriebene Rollenförderer mit Abschaltung oder Auskupplung des Rollenantriebs. Beim Fördern von stoßempfindlichen Waren, deren Abmessungen, Gewichte und Reibwerte unterschiedlich sind, versagen die bekannten Vorrichtungen. Entweder erfolgt ein Aufprall auf das Stauende oder die Bremsverzögerung wird zu groß oder der verfügbare Stauraum wird nicht ausgenutzt.

Bei einer weiteren bekannten Fördereinrichtung, bei der die zu fördernden Waren an bestimmten Stellen der Förderstrecke gestaut werden können, durch einen Stop o. dgl. (US-A-4 318 468). Für geschichtete Waren ist diese Fördereinrichtung nicht geeignet, weil geschichtete Waren wegen der durch die Stapelbildung bedingten Labilität bei jedem Aufprall auf einen Stop umkippen würden; ebenso beim abrupten Anfahren. Außerdem beruht bei der bekannten Fördereinrichtung das Abschaltprinzip auf der Massenträgheit der zu fördernden Gegenstände. Dieses Abschaltprinzip ist aber nur dann funktionsfähig, wenn alle Gegenstände gleich schwer sind und den gleichen Rollwiderstand haben. Auch die Inbewegungsetzung der zu fördernden Gegenstände ist bei der bekannten Fördereinrichtung für geschichtete Waren nicht geeignet. Durch die hierbei vorgesehene Riemenerhöhung ergibt sich ein völlig unkontrollierter, ruckartiger Start, wobei dieser auf den letzten im Stau stehenden Gegenstand einwirkt, und nicht etwa auf den ersten.

Bekannt ist ferner noch ein Sammelförderer, bei dem immer ein Stapel von einem anderen Stapel geschoben wird, so daß keine Lücken zwischen den Stapeln entstehen (DE-A-26 44 240). Auch dieser Sammelförderer ist für das Fördern geschichteter Waren weder bestimmt noch geeignet, denn das Anhalten eines Stapels an einer bestimmten Stelle ist mit dem Sammelförderer nicht möglich.

Der Erfindung liegt die Aufgabe zugrunde, die bekannten Einrichtungen zum Fördern geschichteter Waren dahingehend zu verbessern daß sie auch zum Fördern von stoßempfindlichen Waren mit unterschiedlichen Abmessungen, Gewichten und Reibwerten geeignet sind.

Diese Aufgabe wird durch die erfindungsgemäße Vorrichtung in der Weise gelöst,
- daß über die gesamte Länge der Förderstrecke an beiden Seiten des Fördergurtes - bzw., falls mehrere Fördergurte vorhanden sind, zwischen und neben den Fördergurten - mindestens je eine durch frei drehbare Rollen gebildete Rollenbahn vorgesehen ist,
- daß die Höhenlage des Fördergurtes derart veränderbar ist, daß einzelne Abschnitte des Fördergurtes über die obere Ebene der Rollenbahnen angehoben oder darunter abgesenkt werden können,
- und daß vor und hinter den in ihrer Höhenlage veränderbaren Abschnitten des Fördergurtes Niederhalter angebracht sind, die den Fördergurt auf dem abgesenkten Niveau unterhalb der oberen Ebene der Rollenbahnen halten.

Beim Absenken der betreffenden Abschnitte des Fördergurtes werden die geschichteten Waren von dem Fördergurt auf die frei drehenden, aber nicht angetriebenen Rollen abgelegt, wodurch nach einem kurzen Ausrollen ein sanftes Anhalten der geschichteten Waren erfolgt. Der Fördergurt bewegt sich dabei stetig in seiner Förderrichtung weiter.

Die erfindungsgemäße Vorrichtung fördert auch rutschgefährdete Waren, beispielsweise Papierstapel, sehr schnell und sicher. Sie erlaubt ein sanftes Anhalten an jeder beliebigen Stelle der Förderstrecke.

In Ausgestaltung der Erfindung sind die in ihrer Höhenlage veränderbaren Abschnitte des Fördergurtes kleiner als die Länge der größten der geschichteten Waren. Dadurch ist gewährleistet, daß den geschichteten Waren ein ausreichender Raum zur Verfügung steht, während andererseits nur wenig Stauraum benötigt wird.

Der Fördergurt kann auf einer bewegbaren Unterlage ruhen, beispielsweise auf frei drehbaren Rollen, oder auf einer gleitfähigen Unterlage. Zweckmäßigerweise ruht der Fördergurt auf Gleitschienen, wobei die Gleitschienen in ihrer Höhenlage veränderbar sind.

Die Veränderung der Höhenlage der Gleitschienen und damit die Veränderung der Höhenlage des Fördergurtes kann mechanisch, elektrisch, pneumatisch oder hydraulisch erfolgen. Nach einem Merkmal der Erfindung ist unter den Gleitschienen jeweils mindestens ein pneumatisches Hubkissen vorgesehen.

Nach einem weiteren Merkmal der Erfindung ist das Hubkissen mit an sich bekannten Mitteln versehen, die das Anheben der abgesenkten Abschnitte des Fördergurtes mit geringer Hubgeschwindigkeit ermöglichen. Dadurch wird beim Anheben eines abgesenkten Abschnitts des Fördergurtes - wobei die auf der Rollenbahn angehaltenen geschichteten Waren durch Friktion weiterbefördert werden - eine stoßfreie Beschleunigung der geschichteten Waren erreicht. Somit wird der Anfahrruck erheblich vermindert.

Um eine störungsfreie Förderung der geschichteten Waren zu gewährleisten, ist der Fördergurt als Zahnriemen ausgebildet.

Bei einer bevorzugten Ausführungsform der Erfindung besteht jede die Rollenbahn bildende Rolle aus einer Vielzahl nebeneinander angeordneter kurzer Röllchen. Dadurch entsteht ein aus vielen Röllchen gebildeter Teppich, auf dem die zu fördernden Waren besonders sanft ausrollen. Anzahl und Durchmesser der Röllchen können dabei so gewählt werden, daß der Ausrollweg weitgehend unabhängig ist von Format, Gewicht und Reibwert der zu fördernden Waren.

In Weiterbildung der Erfindung erfolgt die Ansteuerung der Anhebe- oder Absenkbewegung des Fördergurtes bzw. der Hubkissen durch eine Schaltlogik, wobei die Schaltlogik mit einer großen Anzahl von Eingängen zum Anschluß von Sensoren in Verbindung steht. Je mehr Sensoren eingesetzt werden, desto unterschiedlicher kann die Länge der zu fördernden Waren sein und desto enger kann gestaut werden. Die Schaltlogik kann durch eine festverdrahtete Logikschaltung, eine pneumatische Steuerung, eine SPS oder einen frei programmierbaren Rechner realisiert werden.

Als Sensoren werden berührungslose Sensoren verwendet. Hierzu sind alle berührungslosen Anwesenheitssensoren, wie pneumatische, induktive und kapazitive Sensoren, Durchgangs- oder Reflex- Lichtschranken u. dgl. geeignet.

Als besonders zweckmäßig hat es sich erwiesen, die Sensoren als Durchgangslichtschranken auszubilden, wobei als Lichtempfänger kleine Fototransistoren dienen. Durchgangslichtschranken sind kostengünstig und weisen eine hohe Sicherheit auf, da der Lichtsender entweder durch Tageslicht oder durch eine durchgehende Lichtleiste entlang der Förderstrecke gebildet werden kann. Somit müssen nur die Lichtempfänger in Form einer Sensorschiene in geringen Abständen entlang der Förderstrecke aufgereiht werden. Je geringer der Abstand der einzelnen Sensoren voneinander ist, desto exakter läßt sich die angeschlossene Steuerung beeinflussen.

Die Erfindung kann noch dadurch verbessert werden, daß jeweils mindestens zwei benachbarte Fototransistoren parallel geschaltet sind. Hierdurch werden Störungen durch Verschmutzung, Schattenwurf und Sensorausfälle vermieden.

Die parallel geschalteten Sensoren sind auf jeweils einen Eingang der Steuerung geführt. Fällt Licht auf den jeweiligen Sensor, meldet der betreffende Eingang eine "Eins", wird er durch die geschichteten Waren abgedeckt, meldet er "Null". Da bei der erfindungsgemäßen Vorrichtung der Abstand der Sensoren geringer ist als die Länge der kürzesten der geschichteten Waren, wird von den geschichteten Waren stets mehr als ein Sensor abgedeckt. Dadurch erhält die Steuerung ein wirklichkeitsgetreues Abbild der aktuellen Belegung der Förderstrecke in jedem Augenblick.

Durch einen Vergleich des aktuellen Augenblicks mit dem unmittelbar vorausgegangenen hat die Steuerung auch volle Kenntnis über den Bewegungsablauf jeder einzelnen der geschichteten Waren.

Eine weitere Verbesserung der erfindungsgemäßen Vorrichtung wird dadurch erzielt, daß von der Schaltlogik aufgrund der konstanten Fördergeschwindigkeit und des konstanten Sensorabstandes die Länge der einzelnen geschichteten Waren ermittelt und bei einer Abweichung ein Alarm ausgelöst wird. Ein solcher Alarm wird beispielsweise dann ausgelöst, wenn ein Stapel der geschichteten Waren verrutscht oder umgefallen ist. Auch beim Teilen eines Stapels der geschichteten Waren oder beim Zusammenführen von zwei Stapeln kann die vorstehend beschriebene Meßmethode genutzt werden.

Die Schaltlogik hat somit immer ein vollkommenes Bild der Ist-Vorgänge auf der Förderstrecke. Sie vergleicht dieses Bild mit dem durch das Programm vorgeschriebenen Sollbild und erzeugt bei Abweichungen Steuerbefehle, die zum Anheben oder Absenken des Fördergurtes im entsprechenden Abschnitt führen. Damit kann beispielsweise jeder beliebige Stapel der geschichteten Waren genau an der Stelle weich angehalten werden, wo er weitere Waren erwartet. Nach Bestätigung oder Ablauf eines vorgegebenen Zeitraums wird der Stapel sanft beschleunigt und gelangt schließlich bis zum nächsten Sollstop oder bis zum nächsten Stauende. Auch hier rollt der Stapel wieder sanft aus, da die Schaltlogik die Position des Sollstops bzw. des Stauendes kennt und rechtzeitig den Antrieb der geschichteten Waren durch Absenken des Fördergurtes auskuppelt. Dabei schließt der betreffende Stapel so dicht wie möglich auf, jedoch ohne anzustoßen, so daß auch empfindlichste Ware nicht gefährdet sind.

Außer dem vorstehend beschriebenen gezielten Anhalten und dem engen kollisionsfreien Stauen erlaubt die erfindungsgemäße Vorrichtung auch das stoßfreie Verzweigen und Zusammenführen mehrerer Ströme geschichteter Waren. Es lassen sich somit sehr komplexe Warenverteilsysteme mit vertretbarem Aufwand realisieren.

Nach einem weiteren Merkmal der Erfindung ist die Bewegungsrichtung des Fördergurtes umkehrbar.

Im folgenden wird die Erfindung anhand eines in der Zeichnung schematisch dargestellten Ausführungsbeispiels näher erläutert. Es zeigt:

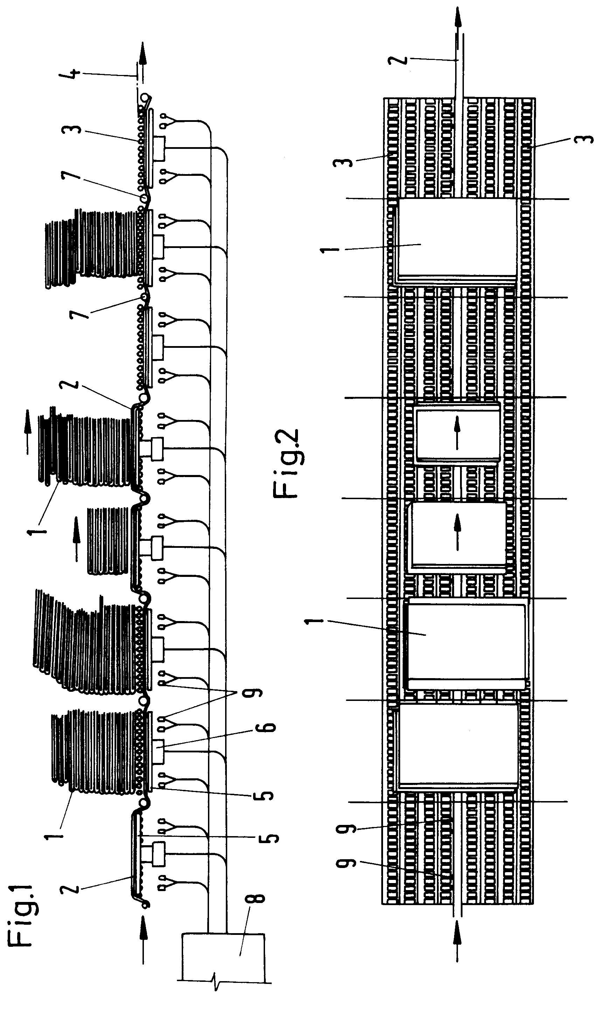

Fig. 1 eine Vorrichtung zum Fördern geschichteter Waren in Seitenansicht;
Fig. 2 eine Draufsicht auf die in Fig. 1 dargestellte Vorrichtung.

Zum Fördern der geschichteten Waren 1 dient ein Fördergurt 2. An beiden Seiten neben dem Fördergurt 2 sind aus drehbaren Rollen gebildete Rollenbahnen 3 vorgesehen. Bei einer Vorrichtung mit mehreren Fördergurten 2 sind Rollenbahnen 3 zwischen und neben den Fördergurten 2 angeordnet. Der Fördergurt 2 ruht auf Gleitschienen 5, unter denen jeweils mindestens ein Hubkissen 6 vorgesehen ist. Vor und hinter den in ihrer Höhenlage veränderbaren Abschnitten des Fördergurtes 2 sind Niederhalter 7 angebracht, die den Fördergurt 2 auf dem abgesenkten Niveau unterhalb der oberen Ebene 4 der Rollenbahn 3 halten.

Die Ansteuerung der Anhebe- oder Absenkbewegung des Fördergurtes 2 bzw. der Hubkissen 6 erfolgt durch eine Schaltlogik 8, die mit einer großen Anzahl von Eingängen zum Anschluß von Sensoren 9 in Verbindung steht. Die Sensoren 9 sind als Durchgangslichtschranken ausgebildet. Als Lichtempfänger dienen hierbei - nicht dargestellte - kleine Fototransistoren, wobei mindestens zwei benachbarte Fototransistoren parallel geschaltet sind.

## Patentansprüche

1. Vorrichtung zum Fördern geschichteter Waren (1) mittels mindestens eines Fördergurtes (2), wobei die zu fördernden geschichteten Waren (1) an bestimmten Stellen bzw. in bestimmten Bereichen der Förderstrecke gestaut werden können,
**dadurch gekennzeichnet**,
1.1 daß über die gesamte Länge der Förderstrecke an beiden Seiten des Fördergurtes (2) - bzw., falls mehrere Fördergurte (2) vorhanden sind, zwischen und neben den Fördergurten (2) - mindestens je eine durch frei drehbare Rollen gebildete Rollenbahn (3) vorgesehen ist,
1.2 daß die Höhenlage des Fördergurtes (2) derart veränderbar ist, daß einzelne Abschnitte des Fördergurtes (2) über die obere Ebene (4) der Rollenbahnen (3) angehoben oder darunter abgesenkt werden können,
1.3 und daß vor und hinter den in ihrer Höhenlage veränderbaren Abschnitten des Fördergurtes (2) Niederhalter (7) angebracht sind, die den Fördergurt (2) auf dem abgesenkten Niveau unterhalb der oberen Ebene (4) der Rollenbahnen (3) halten.

2. Vorrichtung nach Anspruch 1, dadurch gekennzeichnet, daß die in ihrer Höhenlage veränderbaren Abschnitte des Fördergurtes (2) kleiner sind als die Länge der größten der geschichteten Waren (1).

3. Vorrichtung nach Anspruch 1 oder 2, dadurch gekennzeichnet, daß der Fördergurt (2) auf Gleitschienen (5) ruht, wobei die Gleitschienen (5) in ihrer Höhenlage veränderbar sind.

4. Vorrichtung nach Anspruch 1, 2 oder 3, dadurch gekennzeichnet, daß unter den Gleitschienen (5) jeweils mindestens ein pneumatisches Hubkissen (6) vorgesehen ist.

5. Vorrichtung nach Anspruch 4, dadurch gekennzeichnet, daß das Hubkissen (6) mit an sich bekannten Mitteln versehen ist, die das Anheben der abgesenkten Abschnitte des Fördergurtes (2) mit geringer Hubgeschwindigkeit ermöglichen.

6. Vorrichtung nach einem der Ansprüche 1 bis 5, dadurch gekennzechnet, daß der Fördergurt (2) als Zahnriemen ausgebildet ist

7. Vorrichtung nach einem der Ansprüche 1 bis 6, dadurch gekennzeichnet, daß jede die Rollenbahn (3) bildende Rolle aus einer Vielzahl nebeneinander angeordneter kurzer Röllchen besteht.

8. Vorrichtung nach Anspruch 7, dadurch gekennzeichnet, daß die Ansteuerung der Anhebe- oder Absenkbewegung des Fördergurtes (2) bzw. der Hubkissen (6) durch eine Schaltlogik (8) erfolgt, wobei die Schaltlogik (8) mit einer großen Anzahl von Eingängen zum Anschluß von Sensoren (9) in Verbindung steht.

9. Vorrichtung nach Anspruch 8, dadurch gekennzeichnet, daß berührungslose Sensoren (9) verwendet werden.

10. Vorrichtung nach Anspruch 9, dadurch gekennzeichnet, daß die Sensoren (9) als Durchgangslichtschranken ausgebildet sind, wobei als Lichtempfänger kleine Fototransistoren dienen.

11. Vorrichtung nach Anspruch 8, 9 oder 10, dadurch gekennzeichnet, daß jeweils mindestens zwei benachbarte Fototransistoren parallel geschaltet sind.

12. Vorrichtung nach einem der Ansprüche 8 bis 11, dadurch gekennzeichnet, daß der Abstand der Sensoren (9) voneinander geringer ist als die Länge der kürzesten der geschichteten Waren (1).

13. Vorrichtung nach einem der Ansprüche 1 bis 12, dadurch gekennzeichnet, daß von der Schaltlogik (8) aufgrund der konstanten Fördergeschwindigkeit und des konstanten Abstandes der Sensoren (9) die Länge der einzelnen geschichteten Waren (1) ermittelt und bei einer Abweichung ein Alarm ausgelöst wird.

14. Vorrichtung nach einem der Ansprüche 1 bis 13, dadurch gekennzeichnet, daß die Bewegungsrichtung des Fördergurtes (2) umkehrbar ist.

## Claims

1. Device for the conveying of layered goods (1) by means of at least one conveyor belt (2), wherein the layered goods (1) to be conveyed can be accumulated at certain places or in certain regions of the conveying path, characterised in
1.1 that at least one respective roller track (3) formed by freely rotatable rollers is provided at both sides of the conveyor belt (2) - or in case several conveyor belts (2) are present, between and beside the conveyor belts (2) - over the entire length of the conveying path,
1.2 that the height position of the conveyor belt (2) is variable in such a manner that individual portions of the conveyor belt (2) can be raised above or lowered below the upper plane (4) of the roller tracks (3)
1.3 and that presser feet (7), which hold the conveyor belt (2) on the lowered level below the upper plane (4) of the roller tracks (3), are mounted in front of and behind those portions of the conveyor belt (2), which are variable in their height position.

2. Device according to claim 1, characterised in that those portions of the conveyor belt (2), which are variable in their height position, are smaller than the length of the largest of the layered goods (1).

3. Device according to claim 1 or 2, characterised in that the conveyor belt (2) rests on slide rails (5), wherein the slide rails (5) are variable in their height position.

4. Device according to claim 1, 2 or 3, characterised in that at least one respective pneumatic lifting pad (6) is provided below each of the slide rails (5).

5. Device according to claim 4, characterised in that the lifting pad (6) is provided with actually known means which enable the raising of the lowered portions of the conveyor belt (2) at low lifting speed.

6. Device according to one of the claims 1 to 5, characterised in that the conveyor belt (2) is constructed as toothed belt.

7. Device according to one of the claims 1 to 6, characterised in that each roller forming the roller track (3) is formed of a plurality of short small rollers arranged one beside the other.

8. Device according to claim 7, characterised in that the drive control of the raising or lowering movement of the conveyor belt (2) or the lifting pads (6) takes place by way of a logic switching system (8), wherein the logic switching system (8) stands in connection with a large number of inputs for the connection of sensors (9).

9. Device according to claim 8, characterised in that contactless sensors (9) are used.

10. Device according to claim 9, characterised in that the sensors (9) are formed as transmitted light barriers, for which small phototransistors serve as light receivers.

11. Device according to claim 8, 9 or 10, characterised in that at least two neighbouring phototransistors each time are connected in parallel.

12. Device according to one of the claims 8 to 11, characterised in that the spacing of the sensors (9) one from the other is less than the length of the shortest of the layered goods (1).

13. Device according to one of the claims 1 to 12, characterised in that the length of the individual layered goods (1) is ascertained by the logic switching system (8) on the basis of the constant conveying speed and the constant spacing of the sensor (9) and an alarm is initiated in case of deviation.

14. Device according to one of the claims 1 to 13, characterised in that the direction of movement of the conveyor belt (2) is reversible.

## Revendications

1. Dispositif pour le transport de marchandises (1) en couches empilées au moyen d'au moins une courroie de transport (2), dans lequel les marchandises (1) en couches empilées à transporter peuvent être retenues en des emplacements définis, ou dans des zones définies du parcours de transport,
caractérisé en ce que
1.1 sur toute la longueur du parcours de transport, des deux côtés de la courroie de transport (2) ou, lorsque plusieurs courroies de transport (2) sont présentes, entre les courroies de transport (2) et à côté de celles-ci, au moins une piste à rouleaux (3) formée de rouleaux à rotation libre, est chaque fois prévue,
1.2 la position en hauteur de la courroie de transport (2) peut être modifiée de telle façon que des sections individuelles de la courroie de transport (2) peuvent être relevées au-dessus du plan supérieur (4) de la piste à rouleaux (3), ou être abaissées en dessous de ce dernier,
1.3 et en ce que, en avant et en arrière des sections de la courroie de transport (2) dont la position en hauteur peut être modifiée, sont installés des éléments de retenue (7) qui maintiennent la courroie de transport (2) au niveau abaissé en dessous du plan supérieur (4) des pistes à rouleaux (3).

2. Dispositif selon la revendication 1, caractérisé en ce que les sections de la courroie de transport (2) dont la position en hauteur peut être modifiée sont plus courtes que la longueur des plus grandes marchandises (1) en couches empilées.

3. Dispositif selon la revendication 1 ou 2, caractérisé en ce que la courroie de transport (2) repose sur des rails de glissement (5), et la position en hauteur des rails de glissement (5) peut être modifiée.

4. Dispositif selon la revendication 1, 2 ou 3, caractérisé en ce qu'au moins un coussinet pneumatique de relèvement (6) est chaque fois prévu en dessous des rails de glissement (5).

5. Dispositif selon la revendication 4, caractérisé en ce que le coussinet de relèvement (6) est doté de moyens connus en soi, qui permettent le relèvement des sections abaissées de la courroie de transport (2) avec une faible vitesse de relèvement.

6. Dispositif selon l'une des revendications 1 à 5, caractérisé en ce que la courroie de transport (2) est réalisée sous la forme d'une courroie crantée.

7. Dispositif selon l'une des revendications 1 à 6, caractérisé en ce que chacun des rouleaux formant la piste à rouleaux (3) est constitué d'une pluralité de courtes roulettes disposées les unes à côté des autres.

8. Dispositif selon la revendication 7, caractérisé en ce que la commande du déplacement de relèvement ou d'abaissement de la courroie de transport (2) ou des coussinets de relèvement (6) s'effectue par une logique de commutation (8), et la logique de commutation (8) est reliée à un grand nombre d'entrées prévues pour le raccordement de capteurs (9).

9. Dispositif selon la revendication 8, caractérisé en ce que l'on utilise des capteurs (9) sans contact.

10. Dispositif selon la revendication 9, caractérisé en ce que les capteurs (9) sont réalisés sous la forme de barrières lumineuses de passage, et l'on utilise comme récepteurs de lumière de petits phototransistors.

11. Dispositif selon la revendication 8, 9 ou 10, caractérisé en ce que l'on connecte chaque fois en parallèle au moins deux phototransistors voisins.

12. Dispositif selon l'une des revendications 8 à 11, caractérisé en ce que la distance entre les capteurs (9) est plus courte que la longueur des plus courtes marchandises (1) en couches empilées.

13. Dispositif selon l'une des revendications 1 à 12, caractérisé en ce que la longueur des marchandises (1) individuelles en couches empilées est calculée par la logique de commutation (8) sur base de la vitesse constante de transport et de l'écart constant entre les capteurs (9), et en cas d'anomalie, la logique de commutation déclenche une alarme.

14. Dispositif selon l'une des revendications 1 à 13, caractérisé en ce que le sens de déplacement de la courroie transporteuse (2) peut être inversée.
